Europäisches Patentamt

European Patent Office

Office européen des brevets

(19)

(11) Publication number: **0 007 931**
**B2**

# (12) NEW EUROPEAN PATENT SPECIFICATION

(45) Date of publication of the new patent specification: **28.11.84**

(21) Application number: **78300909.5**

(22) Date of filing: **27.12.78**

(51) Int. Cl.³: **C 08 F 291/02** // (C08F291/02, 212/04, 220/12, 222/04)

(54) **Rubber-modified terpolymers with improved heat distortion resistance.**

(30) Priority: **24.07.78 US 927429**

(43) Date of publication of application:
**20.02.80 Bulletin 80/04**

(45) Publication of the grant of the patent:
**28.11.84 Bulletin 84/48**

(45) Mention of the opposition decision:
·**12.05.82 Bulletin 82/19**

(84) Designated Contracting States:
**BE DE FR GB SE**

(56) References cited:
**EP-A-0 002 961**
**DE-A-2 710 771**
**FR-A-2 003 812**
**FR-A-2 326 436**
**FR-A-2 374 362**
**GB-A- 799 200**
**GB-A-1 452 141**
**US-A-3 676 526**
**US-A-3 919 354**
**CHEMICAL ABSTRACTS, vol. 82, No. 2, January 13, 1975, page 22, abstract 4920r. Columbus, Ohio, USA**

(73) Proprietor: **MONSANTO COMPANY**
**Patent Department 800 North Lindbergh Boulevard**
**St. Louis, Missouri 63166 (US)**

(72) Inventor: **Lee, Yoon Chai**
**115 Woodcrest Road**
**Springfield Massachusetts 01129 (US)**
Inventor: **Trementozzi, Quirino Albert**
**55 South Tallyho Drive**
**Springfield Massachusetts 01118 (US)**

(74) Representative: **Pearson, John Lionel et al**
**Monsanto Europe S.A. Avenue de Tervuren 270-272 Letter Box No 1**
**B-1150 Brussels (BE)**

EP 0 007 931 B2

Courier Press, Leamington Spa, England.

**Description**

## Background of the invention

This invention relates to terpolymers and specifically to styrene/maleic anhydride/methacrylate copolymers having a rubber modifier incorporated therein.

Rubber-modified styrenic polymers, commonly referred to a HIPS are very tough and durable and have seen broad acceptance in a variety of uses such as appliance housings and the like.

However, HIPS begins to soften and lose its dimensional integrity under stress at temperatures below those at which it would be required to operate for a number of significant applications.

A rubber-modified styrenic terpolymer composition has now been discovered that produces a surprising improvement in the heat distortion temperature by comparison with HIPS making it suitable for a wide range of uses for which HIPS is disqualified.

## Discussion of the prior art

The influence of maleic anhydride on the heat distortion temperature of a styrenic polymer is very well known in the art and methods of polymerizing styrene and maleic anhydride are described for example in U.S. Patents 2,971,939; 2,989,517; 3,336,267 and British Patent 1,234,395.

It is also known that such styrene/maleic anhydride copolymers can be rubber-modified to produce tough copolymers, similar in morphology to conventional HIPS but with a distinctly higher heat distortion temperature. Such products are described for example in British Patent 1,452,141 and U.S. Patent 3,919,354. These patents also disclose the use of termonomers such as methyl methacrylate in such compositions.

It has now been found that if a specified amount of a methacrylate monomer is incorporated in the polymer, a surprising further improvement in the heat distortion temperature of the polymer is obtained without significant sacrifice in other desirable properties. This improvement does not however, extend across the full range of compositions described in the art but appears to be confined to the narrow compositional range hereinbelow specified.

Additionally it is found that the incorporation of the methacrylate termonomer has the effect of raising the tensile strength and the gloss of the rubber modified polymer in a most advantageous manner making the polymeric product most attractive for a broad spectrum of applications.

According to the present invention there is provided a polymeric composition comprising a rubber substrate polymer having a glass transition temperature below 0°C. grafted with a superstrate polymer and dispersed in a matrix polymer, the superstrate and matrix polymers each comprising a monoalkenyl aromatic monomer, an unsaturated dicarboxylic acid anhydride and a $C_1$ to $C_3$ alkyl methacrylate ester characterised in that there is present in the superstrate and matrix polymers from 45 to 83 percent by weight of the monoalkenyl aromatic monomer, from 15 to 35 percent by weight of the unsaturated dicarboxylic acid anhydride and from 2 to 20 percent by weight of the $C_1$ to $C_3$ alkyl methacrylate ester, that the amount of rubber in the composition, calculated as ungrafted substrate, is from 2 to 30 percent of the composition weight and that said rubber substrate is a polybutadiene comprising at least 90 percent of cis-1,4,-polybutadiene units.

It has been found that the presence of the $C_1$—$C_3$ alkyl methacrylate component has particularly surprising consequences and that the range described above which is mandated by a combination of factors, defines a group of novel rubber-modified terpolymers with unexpected and advantageous properties.

It is found for example that the incorporation of the methacrylate comonomer increases the distortion temperature under load (DTUL) of the polymer. The effect of maleic anhydride on DTUL was known but it was not known however, that a further improvement can be obtained if a methacrylate comonomer is also present. However, this improvement is only obtained over a narrow range and above about 20% by weight methacrylate in the polymer, the advantage is lost.

A second advantage is that other physical properties such as multiaxial impact strength, tensile strength, elongation at fail and gloss of the polymer apparently increase with the amount of the methacrylate in the composition.

The utility of the above advantages is however, circumscribed by the third factor which is that addition of a methacrylate comonomer is found to reduce the thermal decomposition temperature of the polymer. The effect of this can be controlled to some extent by addition of certain stabilizers but it is found that above about 20% by weight of the methacrylate comonomer it is not possible to obtain a polymer that is stable at its processing temperature for the length of time required for conventional forming processes.

Thus, the interplay of these three factors defines in a totally unexpected fashion a range of rubber-modified terpolymers with very advantageous properties.

The preferred polymer compositions within this range will depend largely on the properties desired. Generally, however, the polymers containing from 4 to 10% by weight of the methacrylate comonomer are preparred. This is because the heat distortion temperature, as is explained later, initially increases rapidly with methacrylate content to a broad peak between about 7 and 15% content and thereafter begins a gradual decline. Thus, roughly the same improvement is generally obtained at 7% as

2

at 15% methacrylate content. Additionally, it is preferred to retain the thermal stability as high as possible so as to permit more flexibility in the application of forming processes to the polymers.

## Polymer composition

The polymeric compositoin of the invention comprises a rubber substrate polymer having a glass transition temperature (Tg) below 0°C. grafted with a superstrate polymer and dispersed in a matrix polymer, the superstrate and the matrix polymers each comprising from 45 to 83% (preferably from 50 or 60 to 75%) by weight of a monoalkenyl aromatic monomer, from 15 to 35% (preferably 20—30%) by weight of an unsaturated dicarboxylic acid anhydride, and from 2 to 20% (preferably 4 to 10%) by weight of a $C_1$ to $C_3$ alkyl methacrylate ester, the amount of rubber in the composition, calculated as ungrafted substrate, being from 2 to 30% of the composition weight and the rubber substrate component of the polymeric composition being a polybutadiene which contains at least 90% by weight of cis 1,4-polybutadiene units.

The monoalkenyl aromatic monomer is preferably styrene but styrene derivatives such as alphamethylstyrene, chlorostyrene, 2,4-dichlorostyrene and 2-chloro-4-methylstyrene may be substituted for styrene in whole or in part if desired.

The unsaturated dicarboxylic acid anhydride is most preferably maleic anhydride though any of the homologues of mallic anhydride such as itaconic, citraconic and aconitic anhydrides can also be used.

The polymeric composition further comprises a $C_1$ to $C_3$ alkyl ester of methacrylic acid. The methacrylic ester can be methyl methacrylate, ethyl methacrylate or propyl methacrylate. The preferred copolymerizable monomer is methyl methacrylate.

The polymeric composition is conveniently prepared by dissolving the rubber in a solution of the monoalkenyl aromatic component and the methacrylate ester in a suitable solvent, and then polymerizing the solution with the anhydride component in the manner described in, for example, U.S.P. 2,971,939, U.S.P. 3,336,267 and U.S.P. 3,919,354.

A suitable polymerization schedule can be devised on the basis of the relative reactivities of the monomers. Typical schedules involve preparing an initial reaction mixture comprising a solvent, the bulk of the alkenyl aromatic monomers, a very small amount (or none) of the anhydride monomer and the major portion of the methacrylate termonomer. The rubber is dissolved in this mixture and the balance of the monomers is added slowly during the polymerization.

The amount of rubber substrate (ungrafted basis) in the polymeric composition, which includes the grafted superstrate and any matrix polymer present, is in the range from 2 to 30% by weight based on the weight of the polymeric composition. Preferably, however, the rubber substrate represents from 5 to 25% of the weight of the polymeric composition.

Since as has been indicated above, the addition of methyl methacrylate gives rise to reduction in the temperature at which thermal decomposition of the polymer begins, it is advantageous to incorporate an antioxidant stabilizer into the composition to provide an added degree of protection during processing.

In protecting the polymer against thermal degradation, it is important from a practical point of view that the stability obtained has a reasonable duration. In the laboratory stability is often judged by the performance of the polymer in the molding of a small test-piece. In a commercial operation however, the polymer may well spend several minutes at molding temperatures and an acceptable polymer has to have stability not only at high temperatures but for prolonged periods at high temperatures.

A wide range of antioxidant stabilizers for styrenic polymers is available but particularly satisfactory results can be obtained using 1,3,5-trimethyl-2,4,6-tris[3,5-di-tert-butyl-4-hydroxybenzyl]benzene and 2,2'-methylene-bis-(4-methyl-6-tert-butyl phenol)terephthalate. The rubber component usually requires a different stabilizer such as a tris(alkylphenyl)phosphite though the prior art can supply others that would be effective.

The total amount of stabilizer that may be used is not critical but up to 5% by weight based on the total composition is usually found to be adequate. In general 0.1 to 2% is the range chosen for practical advantage.

The polymeric composition can contain other additives such as for example, additional ungrafted rubber components such as the so-called block rubbers and radial block rubbers, flame retardants, smoke suppressants, U.V. stabilizers, lubricants, antistatic additives, colorants and fillers.

## Description of the preferred embodiments

. The present invention is further described by reference to the following Examples which are for the purposes of illustration only and are not intended to imply any limitation of the scope of the invention.

The polymer compositions are described on the basis of a combination of elemental analysis and titrimetric analysis techniques. The rubber concentration is determined on the basis of material balances in the polymer composition. Unless otherwise stated the rubber used was a medium-cis polybutadiene rubber available from Firestone Corp. under the trade name "Diene 55".

**0 007 931**

The Examples illustrate the results of varying the amount of the methacrylate ester in the composition and the surprising advantages obtained by maintaining the level in the range of 2 to 20% by weight.

In each Example the components were formed into samples which were then tested to determine the distortion temperature under load (DTUL) under a load of 18.6 kg/sq.cm. (ASTM D-648) and in some cases the Izod Impact Strength, (ASTM D-256) and/or the tensile strength or elongation at fail (ASTM D-638).

In some Examples the multiaxial impact strength is shown. This is commonly called the F.D.I. and is measured according to ASTM D-1709 on a sample 2.9 mm in thickness.

The Izod impact strengths were measured using 3.2 × 12.7 × 63.5 mm unannealed compression molded samples, notched 2.54 mm.

The DTUL values given are for 3.2 × 12.7 × 127 mm unannealed compression molded samples tested under a 18.6 kg/sq.cm. stress.

Unannealed compression molded samples were chosen in preference to injection molded samples so as to eliminate the variations that occur in the preparation of injection molded samples which become partially oriented during the forming process. The choice of unannealed compression molded samples which are not oriented during formation, eliminates, one result-affecting variable and makes the comparison more significant.

<center>Examples 1—6</center>

These Examples show the improvement obtained using a high-cis rubber, that is a polybutadiene containing over 90% of cis 1,4-polybutadiene units.

The polymer used in Example 1 was prepared as follows:

An agitated resin kettle was charged with 323 g. of styrene, 15 g. of methyl methacrylate, 0.1 g. of trisnonylphenyl phosphite (a stabilizer for the rubber) and a solvent mixture consisting of 50 g. of methyl ethyl ketone (MEK) and 75 g. of toluene. In this mixture were dissolved 54 g. of a high cis polybutadiene rubber. After the rubber was completely dissolved, a solution of 4 g. of maleic anhydride in 25 g. of MEK was added. The reaction mixture was raised to 85°C. and maintained at that level for the entire reaction period. One ml. of 75% solution of tertiary butyl peracetate in mineral spirit and 0.05 ml. of tertiary butyl peroctoate were added prior to late addition of a solutoin of 73 g. of maleic anhydride, and 7.3 g. of methyl methacrylate in 97.2 g. of MEK. The late addition was continued over a 6—1/2 hour period. Slug additions of 0.1 ml of t-butyl peroctoate were made at 1-1/2, 3, 4-1/2 hours during the late monomer addition. After addition was complete the reaction was held at the reaction temperature for a further 45 minutes before 0.5 g. of hydroquinone was added to short-stop the reaction.

The polymer was then separated from the solvent and the residual monomer removed by a conventional method. The isolated polymer was blended with any desired additives, such as stabilizers, and compression molded into samples for evaluation.

All the other polymers described in the Examples were prepared in essentially the same manner with the necessary adjustment to monomer and rubber charges being determined by the desired composition of the final polymer.

The compositions contained 0.3% by weight of 1,3,5-trimethyl-2,4,6-tris[3,5-di-*tert*-butyl-4-hydroxybenzyl]benzene as an antioxidant stabilizer.

Examples 1—3 and 6 (Comparative) used high-cis rubber while Examples 4 and 5 (Comparative) used the medium-cis rubber described above.

<center>4</center>

TABLE I

Terpolymers reinforced with high CIS rubber

| Example | Polymer Composition S/MA/MMA | % Polybutadiene high cis(1) | medium cis(2) | Izod, J/m notch $\times 10^2$ | Multiaxial* Toughness (FDI), Joules | % Elongation | DTUL °C. |
|---|---|---|---|---|---|---|---|
| 1 | 69/24/7 | 15.4 | — | 1.59 | 28 | 20 | 130 |
| 2 | 68/22/10 | 15.4 | — | 1.65 | — | — | 128 |
| 3 | 60/26/14 | 14.6 | — | 1.58 | — | — | 130 |
| 4C | 66/25/9 | — | 14.7 | 0.89 | — | — | 133 |
| 5C | 76/24/0 | — | 16.6 | 1.13 | 5.4 | 3 | 123 |
| 6C | 75/25/0 | 17 | — | 1.46 | 13.6 | 19 | 125 |

* Multiaxial impact (FDI) determined according to ASTM D—1709 on a 2.9 mm thickness sample.

(1) A polybutadiene rubber containing greater than 90% cis 1,4-polybutadiene units available from Polysar Corporation under the trade name Taktene 1202. (Taktene is a Registered Trade Mark).

(2) A medium-cis polybutadiene rubber available from Firestone Corporation under the trade name Diene 55.

Comparison of the Izod strengths shows that a very significant improvement in impact strength is obtained using this high-cis rubber. Surprisingly, the effect observed is greater where the polymer contains the methacrylate than where it does not.

## Claims

1. A polymeric composition comprising a rubber substrate polymer having a glass transition temperature below 0°C. grafted with a superstrate polymer and dispersed in a matrix polymer, the superstrate and matrix polymers each comprising a monoalkenyl aromatic monomer, an unsaturated dicarboxylic acid anhydride and a $C_1$ to $C_3$ alkyl methacrylate ester characterised in that there is present in the superstrate and matrix polymers from 45 to 83 percent by weight of the monoalkenyl aromatic monomer, from 15 to 35 percent by weight of the unsaturated dicarboxylic acid anhydride and from 2 to 20 percent by weight of the $C_1$ to $C_3$ alkyl methacrylate ester, that the amount of rubber in the composition, calculated as ungrafted substrate, is from 2 to 30 percent of the composition weight and that said rubber substrate is a polybutadiene comprising at least 90 percent of cis-1,4-polybutadiene units.

2. A polymeric composition according to Claim 1, characterized in that said $C_1$ to $C_3$ alkyl methacrylate is methyl methacrylate.

3. A polymeric composition according to either of Claims 1 and 2, characterized in that there is present in the superstrate and matrix polymers from 4 to 10% by weight of the $C_1$ to $C_3$ alkyl methacrylate ester.

## Patentansprüche

1. Polymer-Zusammensetzung, enthaltend ein Kautschuk-Substratpolymer mit einer Glasübergangstemperatur untehralb von 0°C, welches mit einem Superstrate-Polymer gepfropft ist und in einem Matrixpolymer dispergiert ist, wobei das Superstrate-Polymer und das Matrixpolymer jeweils ein Monoalkenyl-Aromaten-Monomer, ein ungesättigtes Dicarbonsäureanhydrid und einen $C_1C_3$-Alkylmethacrylatester enthalten, dadurch gekennzeichnet, daß in dem Superstrate-und in dem Matrixpolymer 45 bis 83 Gew.-% des Monoalkenyl-Aromaten-Monomers, 15 bis 35 Gew.-% des ungesättigten Dicarbonsäureanhydrids und 2 bis 20 Gew.-% des $C_1$—$C_3$-Alkylmethacrylatesters vorhanden sind, daß die Menge des Kautschuks in der Zusammensetzung, berechnet als nicht gepfropftes Substrat, 2 bis 30% des Gewichtes der Zusammensetzung beträgt, und das Kautschuksubstrat ein Polybutadien ist, welches mindestens 90% cis-1,4-Polybutadieneinheiten enthält.

5

2. Polymer-Zusammensetzung nach Anspruch 1, dadurch gekennzeichnet, daß das C₁—C₃-Alkylmethacrylat Methylmethacrylat ist.

3. Polymer-Zusammensetzung nach einem der Ansprüche 1 und 2, dadurch gekennzeichnet, daß in dem Superstrate- und in dem Matrixpolymer 4 bis 10 Gew.-% des C₁—C₃-Alkylmethacrylatesters vorhanden sind.

**Revendications**

1. Composition polymère comprenant un polymère de substrat caoutchouteux ayant une température de transition vitreuse inférieure à 0°C, greffé avec un polymère de strate supérieure et dispersé dans un polymère de matrice, les polymères de strate supérieur et de matrice comprenant chacun un monomère monoalcényl aromatique, un anhydride d'acide dicarboxylique insaturé et un méthacrylate d'alkyle en $C_2$ à $C_3$, caractérisée en ce que les polymères de strate supérieure et de matrice contiennent de 45 à 83% en poids du monomère monoalcényl aromatique, de 15 à 35% en poids de l'anhydride d'acide dicarboxylique insaturé et de 2 à 20% en poids du méthacrylate d'alkyle en $C_1$ à $C_3$, en ce que la quantité de caoutchouc dans la composition, calculée sous forme de substrat non greffé, est de 2 à 30% du poids de la composition et en ce que ce substrat de caoutchouc est un polybutadiène comprenant au moins 90% de motifs cis-1,4-polybutadiène.

2. Composition polymère selon la revendication 1, caractérisée en ce que ce méthacrylate d'alkyle en $C_1$ à $C_3$ est du méthacrylate de méthyle.

3. Composition polymère selon l'une quelconque des revendications 1 et 2, caractérisée en ce que les polymères de strate supérieure et de matrice contiennent de 4 à 10% en poids de méthacrylate d'alkyle en $C_1$ à $C_3$.